# EUROPEAN PATENT APPLICATION

(11) **EP 4 592 783 A1**
(43) Date of publication of application: **30.07.2025**
(21) Application number: 23867439.4
(22) Date of filing: 18.09.2023
(51) Int. Cl.: G05D 1/00

(54) **AIRCRAFT ATTITUDE CONTROL METHOD AND APPARATUS, ELECTRONIC DEVICE, AND STORAGE MEDIUM**

(30) Priority: 19.09.2022 CN 202211139946
(71) Applicant: Autoflight (Kunshan) Co., Ltd., Suzhou, Jiangsu 215345 (CN)
(72) Inventor: TIAN, Yu, Suzhou, Jiangsu 215345 (CN); CUI, Yongqiang, Suzhou, Jiangsu 215345 (CN)
(74) Representative: MERH-IP Matias Erny Reichl Hoffmann Patentanwälte PartG mbB
(86) International application number: PCT/CN2023/119326
(87) International publication number: WO 2024/061150

(57) **Abstract**

The present invention relates to the field of aircraft technology, and in particular to an aircraft attitude control method, which is applied to an aircraft. Wherein the aircraft comprises a plurality of support legs and a plurality of rotors. Wherein a pressure sensor is provided at the bottom of each support leg to detect the pressure at the bottom of the support leg, and the rotors and the support legs are provided on both sides of the aircraft correspondingly. The aircraft attitude control method comprises: obtaining the pressure at the bottom of the support legs on each side through the pressure sensors of the support legs and controlling the power output of the corresponding rotors on each side according to the pressure at the bottom of the support legs on each side to adjust the attitude of the aircraft. The aircraft attitude control method of the present invention can prevent the aircraft from bouncing back due to the rotors still generating lift after the aircraft touches the ground, and achieve a stable landing attitude.

## Description

### Technical Field

The present invention relates to the field of aircraft technology, and in particular to an aircraft attitude control method, an aircraft landing control device, an electronic device and a storage medium.

### Background

Vertical take-off and landing aircraft use electricity as all or part of the energy source of the propulsion system, which is an important symbol of the "third aviation" era. It will usher in a new round of innovation and reform in the aviation field, promote the development of green aviation, and have a revolutionary impact on the world's aviation industry. On the one hand, when vertical take-off and landing aircraft land, they will be affected by the ground effect, which may cause rebound and unstable landing. On the other hand, after the aircraft lands, the rotor blades in the idle state are easily affected by the crosswind, causing lateral movement or rollover.

### Specification

One purpose of the present invention is to provide an aircraft attitude control method, an aircraft landing control device, an electronic device and a storage medium. The aircraft attitude control method of the present invention can prevent the aircraft from bouncing back due to the lift still generated by the rotor after the aircraft touches the ground, and achieve a stable landing attitude.

To achieve this purpose, the first aspect of the present invention provides an aircraft attitude control method, which is to be applied to an aircraft, wherein the aircraft comprises a plurality of support legs and a plurality of rotors, wherein a pressure sensor is provided at the bottom of each support leg to detect the pressure at the bottom of the support leg, and the rotor and the support leg are provided on both sides of the aircraft, respectively. The aircraft attitude control method comprises:
acquiring the pressure at the bottom of each support leg through the pressure sensor of each support leg;
controlling the power output of the corresponding rotor on each side according to the pressure at the bottom of each support leg to adjust the attitude of the aircraft.

The second aspect of the present invention provides an aircraft landing control device, which is to be applied to an aircraft, wherein the aircraft comprises a plurality of support legs and a plurality of rotors, wherein a pressure sensor is provided at the bottom of each support leg to detect the pressure at the bottom of the support leg, and the rotor and the support leg are provided on both sides of the aircraft correspondingly, and the aircraft landing control device comprises:
an acquisition module, which is used to acquire the real-time pressure value of the bottom of each support leg through the pressure sensor of each support leg;
a control module, which is used to control the power output of each rotor according to the real-time pressure value of the pressure sensor on each side and the power state of the rotor on each side to control the attitude of the aircraft.

The third aspect of the present invention provides an electronic device, comprising: a memory for storing a computer program and a processor for executing the computer program to implement the steps of the aircraft attitude control method as claimed in the claim.

The fourth aspect of the present invention provides a computer-readable storage medium for storing a computer program; wherein the computer program implements the steps of the aircraft attitude control method when executed by the processor.

In some embodiments, the control of the power output of the corresponding rotor on each side according to the pressure at the bottom of the support legs on each side to adjust the attitude of the aircraft specifically comprises:
estimating the flight attitude of the aircraft according to the real-time pressure value of the pressure sensor on each side;
controlling the power output of each rotor according to the flight attitude of the aircraft, the power state of the rotor on each side and the pressure value of the pressure sensor on each side to control the attitude of the aircraft.

In some embodiments, the control of the flight attitude of the aircraft according to the pressure at the bottom of the support legs on each side specifically comprises:
when the sum of the pressures at the bottom of the support legs on each side is greater than or equal to the first preset threshold value within a unit time, the flight attitude of the aircraft is judged to be a grounded state, wherein the first preset threshold value is equal to the pressure of the gravity of the aircraft on the ground;
when at least one of the pressures at the bottom of all the support legs is zero within a unit time, the flight attitude of the aircraft is judged to be a non-grounded state.

In some embodiments, the power output of the rotors on both sides is controlled to adjust the attitude of the aircraft according to the flight attitude of the aircraft, the pressure value of each support leg, and the real-time power state of each rotor, at least comprising:
when the flight attitude of the aircraft is in the grounded state and the rotors on each side are in the power output state,
cut off the power output of the rotors on each side; or
reduce the power output of the rotors on each side to the lowest idle state.

In some embodiments, the power output of each rotor is controlled to adjust the attitude of the aircraft according to the flight attitude of the aircraft, the pressure value of each pressure sensor, and the real-time power state of each rotor, at least comprising:
when the flight attitude of the aircraft is in the non-grounded state, and the pressure at the bottom of any support leg increases from zero to a second preset threshold value within a unit time,
control the power output of the rotor on the side where the pressure at the bottom of the support leg increases to decrease or stop;
and/or, control the power output of the rotor on the side where the pressure at the bottom of the support leg is zero to increase.

In some embodiments, the power output T of the rotor on the side where the pressure at the bottom of the support leg is zero is calculated based on the gravity G distributed on the corresponding side by the gravity of the aircraft and the distance W between the support legs on both sides, where T=G*W.

In some embodiments, applied to an aircraft, the flight attitude of the aircraft is in a grounded state and the rotor is in an idle state. When the pressure at the bottom of the support leg of the aircraft on either side decreases within a unit time and the sum of the pressures at the bottom of the support leg on both sides remains unchanged, the power output of the rotor on the side where the pressure at the bottom of the support leg decreases is controlled to decrease; and/or when the pressure at the bottom of the support leg of the aircraft on either side increases within a unit time and the sum of the pressures at the bottom of the support leg on both sides remains unchanged, the power output of the rotor on the side where the pressure at the bottom of the support leg increases is controlled to increase.

### Beneficial effects of the present invention:

The aircraft attitude control method of the present invention can prevent the aircraft from bouncing back due to the rotor still generating lift after the aircraft touches the ground, thereby achieving a stable grounding attitude.

### Description

Figure 1 is a flow chart of the aircraft attitude control method provided in the first embodiment of the present invention;
Figure 2 is a structural schematic diagram of the aircraft grounding state provided in the first embodiment of the present invention;
Figure 3 is a rear view of the aircraft grounding state provided in the first embodiment of the present invention;
Figure 4 is a rear view of the aircraft non-grounding state provided in the first embodiment of the present invention;
Figure 5 is a rear view of the aircraft single-sided grounding state provided in the first embodiment of the present invention;
Figure 6 is another rear view of the aircraft single-sided grounding state provided in the first embodiment of the present invention;
Figure 7 is a rear view of the aircraft double-sided fully grounded state provided in the first embodiment of the present invention;
Figure 8 is a structural schematic diagram of the aircraft landing control device provided in the second embodiment of the present invention;
Figure 9 is a structural schematic diagram of the electronic device provided in the third embodiment of the present invention.

### Specific implementation method

The technical solution of the present invention is further described below in conjunction with the accompanying drawings and implementation methods. It is understood that the specific embodiments described herein are only used to explain the present invention, not to limit the present invention. It should also be noted that, for the convenience of description, only the parts related to the present invention are shown in the accompanying drawings, not all.

In the description of the present invention, it should be noted that, unless otherwise clearly specified and limited, the terms "installation", "connection", and "connection" should be understood in a broad sense, for example, it can be a fixed connection or a detachable connection. It can be a mechanical connection or an electrical connection. It can be a direct connection or an indirect connection through an intermediate medium, or it can be a connection between two components. For ordinary technicians in this field, the specific meanings of the above terms in the present invention can be understood in specific circumstances.

In the present invention, unless otherwise clearly specified and limited, the first feature "above" or "below" the second feature can include the first and second features being in direct contact, or the first and second features not being in direct contact but being in contact through another feature between them. Moreover, the first feature "above", "above" and "above" the second feature include the first feature being directly above and obliquely above the second feature, or simply indicating that the first feature is higher in level than the second feature. The first feature "below", "below" and "below" the second feature include the first feature being directly below and obliquely below the second feature, or simply means that the first feature is less than the second feature in horizontal height.

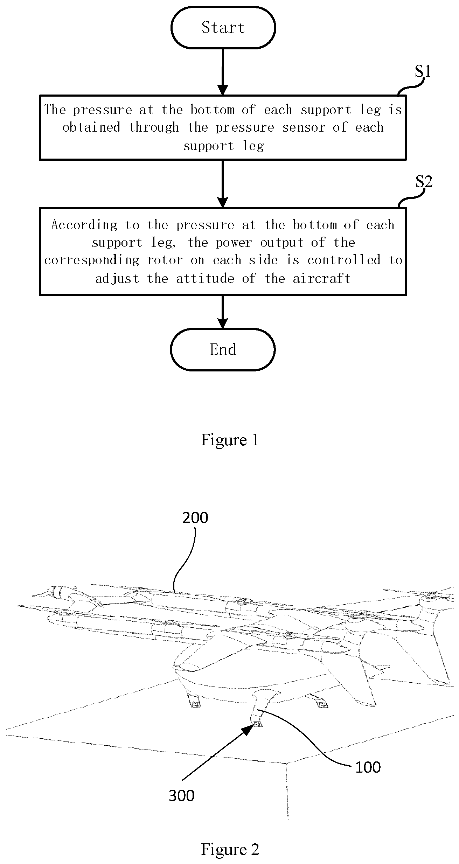

The aircraft attitude control method of the present invention, as shown in FIG. 1, comprises the following steps:
S1: acquiring the pressure at the bottom of each support leg through the pressure sensor of each support leg.

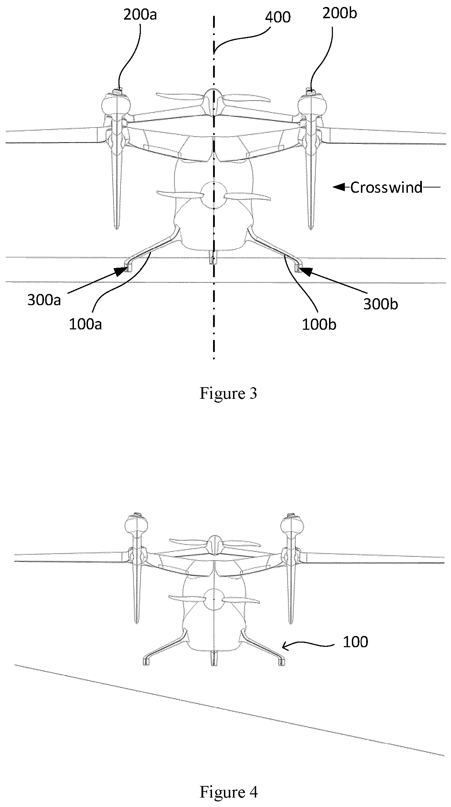

Specifically, as shown in FIG. 2, the aircraft of the embodiment of the present invention comprises three support legs 100 and eight rotors 200, wherein each support leg 100 is provided with a pressure sensor 300 at the bottom to detect the pressure at the bottom of each support leg 100, and a plurality of rotors 200 and a plurality of support legs 100 are respectively arranged on both sides of the aircraft. As shown in FIG. 3, the three support legs 100 are symmetrically arranged around the first center plane 400 of the aircraft, and the eight rotors are also symmetrically arranged around the first center plane 400 of the aircraft. The support legs 100 include a left support leg 100a and a right support leg 100b, wherein the left support leg 100a is provided with a left pressure sensor 300a, and the right support leg 100b is provided with a right pressure sensor 300b, and the left support leg 100a and the left rotor 200a are correspondingly arranged on the left side of the aircraft, and the right support leg 100b and the right rotor 200b are correspondingly arranged on the right side of the aircraft.

When the aircraft is in the air, the bottom of the support leg 100 is not grounded, that is, it is not under pressure, and the real-time pressure value of the pressure sensor 300 is zero. When the aircraft touches the ground, the bottom of the support leg 100 is compressed by the aircraft's own gravity, and the real-time pressure at the bottom of the support leg 100 can be detected and read by the pressure sensor 300.

S2: controlling the power output of the corresponding rotors at each side according to the pressure at the bottom of each support leg to adjust the attitude of the aircraft.

The system monitors the real-time pressure value of the pressure sensor 300 at the bottom of the support leg 100 on both sides. When the sum of the pressure at the bottom of the support leg on both sides is greater than or equal to the first preset threshold value per unit time, the flight attitude of the aircraft is estimated to be in the ground state, wherein the first preset threshold value is equal to the pressure of the aircraft's gravity on the ground. Specifically, due to measurement errors and the fact that the rotor is still outputting power to generate a certain lift after touching the ground, the first preset threshold value is set to be approximately equal to the pressure of the aircraft's gravity on the ground, and its error range does not exceed 10% of the aircraft's gravity, that is, the first preset threshold value can be set to at least 90% of the pressure of the aircraft's gravity on the ground. In addition, gravity acceleration occurs at the moment of the aircraft touching the ground, and the real-time pressure value of the pressure sensor is greater than the pressure of the aircraft's gravity on the ground at the moment of touching the ground. Therefore, when the sum of the pressures on the bottom of the support legs on both sides is greater than or equal to the first preset threshold value within a unit time, the flight attitude of the aircraft is estimated to be in a grounded state, wherein the unit time T can be within 0.1ms or other time periods.

When the system estimates that the aircraft is in a grounded state, and the power state of the rotors 200 on both sides is still in a medium-high speed operation state, the system can actively cut off all or part of the rotor power, or reduce all or part of the rotor power to the lowest idle state, thereby avoiding the aircraft from bouncing after the aircraft touches the ground due to the lift still generated by its rotors, resulting in unstable landing.

When the aircraft is in a grounded state and the rotors are in an idle state, the aircraft may encounter a crosswind that causes the aircraft to tilt. At this time, the real-time pressure value of each pressure sensor 300 changes within a unit time. Specifically, as shown in FIG. 3, the blade of the propeller in the idle state of the rotor is easily affected by the crosswind. For example, the right crosswind causes the aircraft to have a leftward tilting tendency, resulting in an increase in the pressure at the bottom of the left support leg 100a and a decrease in the pressure at the bottom of the right support leg 100b. At this time, the power output of the left rotor 200a corresponding to the left support leg 100a can be controlled to increase, thereby increasing the lift generated by the left rotor 200a; the power output of the right rotor 200b corresponding to the right support leg 100b can be controlled to decrease, thereby reducing the lift generated by the right rotor 200b, so that the pressure on the left and right support legs is quickly balanced. Because the system reads the pressure change trend through the pressure sensor to give the aircraft roll signal, the input signal of the system attitude control can be given in advance before the aircraft attitude has no obvious change, and the reaction speed is greatly advanced, which improves the aircraft's ability to resist crosswinds in the idle state of the rotor, and does not cause bumpy feelings to passengers inside the aircraft, improving the passengers' riding experience.

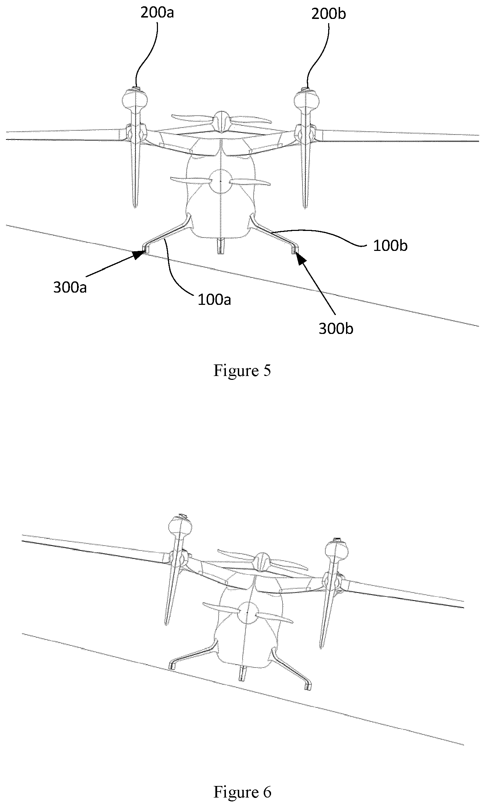

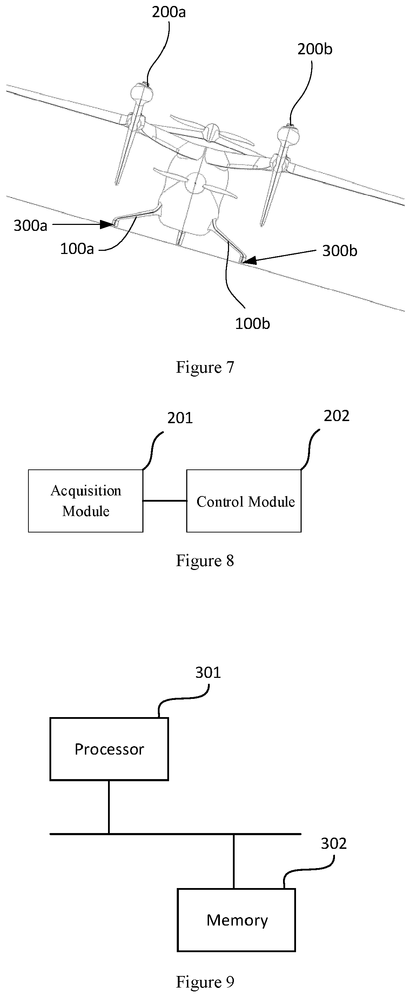

Furthermore, when the aircraft lands on an inclined ground, the aircraft touches the ground at a single point, and it is easy for only one side of the power to work while the grounded side still generates some lift, which poses a risk of rollover. The aircraft attitude control method of the embodiment of the present invention can also be used for attitude control when the aircraft lands on an inclined ground. As shown in FIG. 4, when the support legs 100 of the aircraft are completely not grounded, the system can control the aircraft attitude by relying on the aircraft's own attitude change. As shown in FIG. 5, as the altitude decreases, when the left support leg 100a on one side touches the ground, the left pressure sensor 300a begins to participate in attitude control. Specifically, the left pressure sensor 300a detects the real-time pressure at the bottom of the support leg. When the pressure value is greater than zero or greater than a second preset threshold value within a unit time, it is estimated that the left support leg 100a is grounded. The system makes the left rotor 200a corresponding to the left support leg 100a on the ground side reduce the power output as much as possible, or even completely cut off, and only controls the aircraft attitude through the right rotor 200b. The lift output by the right rotor 200b can be calculated based on the pressure detected by the left pressure sensor 300a and the distance between the support legs on both sides. Specifically, the total gravity of the aircraft can be deducted from the pressure detected by the left pressure sensor 300a to obtain the total gravity of the aircraft distributed on the right support leg 100b, and then the lift T output by the right rotor 200b can be obtained according to the gravity G distributed on the right support leg 100b and the distance W between the two support legs (i.e., the suspended support leg and the ground support leg). Specifically, the lift T that the right rotor 200b needs to output is T=G*W. The intermediate state of the attitude is shown in Figure 6. Until the right pressure sensor 300b gives a complete grounding signal as shown in Figure 7, the system will completely cut off the power of all rotors. The second preset threshold is a smaller value close to zero. The embodiment of the present invention controls the aircraft to land completely by cutting off or reducing the rotor power on the grounding side and only adjusting the unilateral rotor power to control the aircraft to land completely, which can avoid the aircraft from bouncing after the aircraft touches the ground on one side because its rotor still generates lift, resulting in unstable landing, and will not cause bumpy feeling to the passengers inside the aircraft, thereby improving the passengers' riding experience.

It should be noted that the number of support legs 100 and rotors 200 in the embodiment of the present invention is only for illustrative purposes. For example, the support legs 100 may be two pairs or more, respectively arranged on both sides of the aircraft, and the rotors 200 may be other numbers, respectively arranged on both sides of the aircraft. The above-mentioned two sides may be the left and right sides in the above-mentioned embodiment, or the front and rear sides. In addition, the left rotor 200a and the right rotor 200b in the accompanying drawings of the present embodiment may refer to one rotor or the general term for all rotors on one side, and no specific restrictions are made here. In addition, it should be pointed out that the aircraft attitude control method of the embodiment of the present invention through the pressure sensor in the support leg is not mutually exclusive with the traditional aircraft angle control method.

The second embodiment of the present invention relates to an aircraft landing control device, which is to be applied to an aircraft, wherein the aircraft comprises a plurality of support legs and a plurality of rotors, wherein a pressure sensor is provided at the bottom of each support leg to detect the pressure at the bottom of the support leg, and the rotors and the support legs are correspondingly provided on both sides of the aircraft, as shown in FIG. 8, comprising an acquisition module 201 and a control module 202. The acquisition module 201 is used to acquire the pressure at the bottom of each support leg through the pressure sensor of each support leg; the control module 202 is used to control the power output of the corresponding rotors on each side according to the pressure at the bottom of each support leg to adjust the attitude of the aircraft. The aircraft landing control device of the embodiment of the present invention can prevent the aircraft from bouncing back due to the lift still generated by the rotors after the aircraft touches the ground, and achieve a stable landing attitude.

It is not difficult to find that this embodiment is a system embodiment corresponding to the first embodiment, and this embodiment can be implemented in conjunction with the first embodiment. The relevant technical details mentioned in the first embodiment are still valid in this embodiment, and in order to reduce repetition, they are not repeated here. Accordingly, the relevant technical details mentioned in this embodiment can also be applied in the first embodiment.

It is worth mentioning that all modules involved in this embodiment are logical modules. In practical applications, a logical unit can be a physical unit, a part of a physical unit, or a combination of multiple physical units. In addition, in order to highlight the innovative part of the present invention, this embodiment does not introduce units that are not closely related to solving the technical problems proposed by the present invention, but this does not mean that there are no other units in this embodiment.

The third embodiment of the present invention relates to an electronic device, as shown in FIG. 9, comprising at least one processor 301 and a memory 302 connected to at least one processor 301 in communication. Wherein the memory 302 stores instructions that can be executed by at least one processor 301, and the instructions are executed by at least one processor 301 so that at least one processor 301 can execute the above-mentioned speech recognition text correction method.

Wherein, the memory 302 and the processor 301 are connected in a bus manner, and the bus can include any number of interconnected buses and bridges, and the bus connects various circuits of one or more processors 301 and the memory 302 together. The bus can also connect various other circuits such as peripheral devices, voltage regulators, and power management circuits together, which are all well known in the art, and therefore, they are not further described herein. The bus interface provides an interface between the bus and the transceiver. The transceiver can be one element or multiple elements, such as multiple receivers and transmitters, providing a unit for communicating with various other devices on a transmission medium. The data processed by the processor is transmitted on the wireless medium through the antenna, and further, the antenna also receives the data and transmits the data to the processor 301.

The processor 301 is responsible for managing the bus and general processing, and can also provide various functions, including timing, peripheral interfaces, voltage regulation, power management and other control functions. And the memory 302 can be used to store data used by the processor 301 when performing operations.

The fourth embodiment of the present invention relates to a computer-readable storage medium storing a computer program. The computer program implements the above method embodiment when executed by the processor.

That is, those skilled in the art can understand that all or part of the steps in the method of the above embodiment can be completed by instructing the relevant hardware through a program, and the program is stored in a storage medium, including a number of instructions to enable a device (which can be a single-chip microcomputer, chip, etc.) or a processor (processor) to perform all or part of the steps of the method described in each embodiment of the present invention. The aforementioned storage media include: U disk, mobile hard disk, read-only memory (ROM), random access memory (RAM), disk or optical disk and other media that can store program code.

Obviously, the above embodiments of the present invention are only examples for clearly illustrating the present invention, and are not limitations on the implementation methods of the present invention. For ordinary technicians in the relevant field, other different forms of changes or modifications can be made on the basis of the above description. It is not necessary and impossible to list all the implementation methods here. Any modifications, equivalent substitutions and improvements made within the spirit and principles of the present invention should be included in the scope of protection of the claims of the present invention.

## Claims

1. An aircraft attitude control method, **characterized in that**, the aircraft comprises a plurality of rotors and a plurality of support legs, wherein a pressure sensor is provided at the bottom of each support leg to detect the pressure at the bottom of the support leg, and the plurality of rotors and the plurality of support legs are correspondingly provided on both sides of the aircraft, and the aircraft attitude control method comprises:
acquiring the pressure at the bottom of each support leg through the pressure sensor of each support leg;
controlling the power output of the corresponding rotors at each side according to the pressure at the bottom of each support leg to adjust the attitude of the aircraft.

2. The aircraft attitude control method according to claim 1, **characterized in that** the method for controlling the power output of the corresponding rotors at each side according to the pressure at the bottom of each support leg to adjust the attitude of the aircraft specifically comprises:
estimating the flight attitude of the aircraft according to the pressure at the bottom of each support leg;
controlling the power output of the rotors at both sides according to the flight attitude of the aircraft, the pressure at the bottom of each support leg and the real-time power state of the rotors at each side to adjust the attitude of the aircraft.

3. The aircraft attitude control method according to claim 2, **characterized in that** the method of estimating the flight attitude of the aircraft according to the pressure at the bottom of the support legs on each side specifically comprises:
when the sum of the pressure at the bottom of the support legs on each side is greater than or equal to a first preset threshold value within a unit time, the flight attitude of the aircraft is estimated to be in a grounded state, wherein the first preset threshold value is equal to the pressure of the aircraft's gravity on the ground;
when at least one of the pressures at the bottom of all the support legs is zero within a unit time, the flight attitude of the aircraft is estimated to be in a non-grounded state.

4. The aircraft attitude control method according to claim 3, **characterized in that** the method of controlling the power output of the rotors on both sides to adjust the attitude of the aircraft according to the flight attitude of the aircraft, the pressure value of each support leg and the real-time power state of each rotor comprises:
when the flight attitude of the aircraft is in a grounded state and the rotors on each side are in a power output state,
cut off the power output of the rotors on each side; or
reduce the power output of the rotors on each side to the lowest idle state.

5. The aircraft attitude control method according to claim 3, **characterized in that**, according to the flight attitude of the aircraft, the pressure value of each pressure sensor and the real-time power state of each rotor, the power output of each rotor is controlled to adjust the attitude of the aircraft further comprises:
when the flight attitude of the aircraft is in a non-grounded state, and the pressure at the bottom of any of the support legs increases from zero to a second preset threshold value within a unit time,
control the power output of the rotor to decrease or stop on the side where the pressure at the bottom of the support leg increases;
and/or, control the power output of the rotor to increase on the side where the pressure at the bottom of the support leg is zero.

6. The aircraft attitude control method according to claim 5, **characterized in that** the power output, T, of the rotor on the side where the pressure at the bottom of the support leg is zero, is calculated based on the gravity, G, of the aircraft weight distributed on the corresponding side and the distance, W, between the support legs on both sides, where T=G*W.

7. The aircraft attitude control method according to claim 3, **characterized in that**, when applied to an aircraft, the flight attitude of the aircraft is in a grounded state and the rotor is in an idle state, when the pressure at the bottom of the support leg of the aircraft on either side decreases within a unit time and the sum of the pressures at the bottom of the support leg on both sides remains unchanged, the power output of the rotor on the side where the pressure at the bottom of the support leg decreases is controlled to decrease; and/or when the pressure at the bottom of the support leg of the aircraft on either side increases within a unit time and the sum of the pressures at the bottom of the support leg on both sides remains unchanged, the power output of the rotor on the side where the pressure at the bottom of the support leg increases is controlled to increase.

8. An aircraft landing control device, **characterized in that** it is to be applied to an aircraft, the aircraft comprises a plurality of rotors and a plurality of support legs, wherein a pressure sensor is provided at the bottom of each support leg to detect the pressure at the bottom of the support leg, the rotor and the support leg are correspondingly provided on both sides of the aircraft, and the aircraft landing control device comprises:
an acquisition module, used to acquire the pressure at the bottom of each support leg through the pressure sensor of each support leg;
a control module, used to control the power output of the corresponding rotor on each side according to the pressure at the bottom of each support leg to adjust the attitude of the aircraft.

9. An electronic device, **characterized in that** it comprises:
a memory, used to store a computer program;
a processor, used to execute the computer program to implement the steps of the aircraft attitude control method as described in any one of claims 1 to 7.

10. A computer-readable storage medium, **characterized in that** it is used to store a computer program; wherein when the computer program is executed by the processor, the steps of the aircraft attitude control method as described in any one of claims 1 to 7 are implemented.
